# EUROPÄISCHE PATENTSCHRIFT

(11) **EP 0 585 475 B1**
(45) Veröffentlichungstag und Bekanntmachung des Hinweises auf die Patenterteilung: **23.09.1998**
(21) Anmeldenummer: 92113106.6
(22) Anmeldetag: 31.07.1992
(51) Int. Cl.: H04Q 11/08

(54) **Verfahren zum Laden und Prüfen des Haltespeichers einer Zeitstufe in einem Koppelnetz einer digitalen Zeitmultiplex-Vermittlungsstelle**
Method for charging and testing the control memory of a time stage in a switching network of a digital TDM exchange
Procédé pour charger et tester la mémoire de commande d'un étage temporel dans un réseau de commutation d'un central numérique à division dans le temps

(43) Veröffentlichungstag der Anmeldung: 09.03.1994
(73) Patentinhaber: SIEMENS AKTIENGESELLSCHAFT, 80333 München (DE)
(72) Erfinder: Troost, Marcel Abraham, Dipl.-Ing., W-8000 München 71 (DE)

(56) Entgegenhaltungen:
- EP-A- 62 295
- EP-A- 86 634
- FR-A- 2 222 727
- GB-A- 2 221 368
- US-A- 4 485 467
- US-A- 4 510 597
- US-A- 4 858 227
- IEICE TRANSACTIONS Bd. E74, Nr. 4, Oktober 1991, TOKYO (JP) Seiten 909 - 916 , XP241314 OHTOMO ET AL 'A 4096-Channel Time-Swich LSI with Switching Address Protection'
- COMMUTATION & TRANSMISSION Bd. 3, Nr. 1, M rz 1981, PARIS (DE) Seiten 63 - 68 CHARRANSOL ET AL 'M.T.S. Circuit standard pour équipements modulaires de commutation temporelle'

## Beschreibung

Die Erfindung betrifft ein Verfahren zum Laden und Prüfen eines Haltespeichers zur Ansteuerung eines Koppelstufeninformationsspeichers in einem Koppelnetz einer digitalen Zeitmultiplex-Vermittlungsstelle gemäß dem Oberbegriff es Patentanspruchs 1.

Koppelnetze digitaler Zeitmultiplex-Vermittlungsstellen beinhalten Koppelstufeninformationsspeicher, mit deren Hilfe sowohl eine räumliche als auch eine zeitliche Vermittlung vorgenommen wird. Es werden hierbei die Informationsinhalte von Zeitkanälen auf an den Informationsspeicher angeschlossenen ankommenden Multiplexleitungen in normalerweise andere Zeitkanäle einer anderen abgehenden Multiplexleitung umgesetzt.

Üblicherweise erfolgt hierbei das Einschreiben der Informationsinhalte der ankommenden Zeitkanäle zyklisch in den einzelnen ankommenden Multiplexleitungen und den darauf gebildeten Zeitkanälen individuell zugeordnete Speicherzellen, wozu ein Zähler die entsprechenden Ansteueradressen liefert. Das Auslesen aus den Speicherzellen auf die abgehenden Zeitmultiplexleitungen in den gewünschten Zeitkanallagen erfolgt wahlfrei, wozu ein Haltespeicher die entsprechenden Ausleseansteueradresse liefert. Der Haltespeicher wird hierbei zyklisch angesteuert.

Ein Einschreiben in den Informationsspeicher und ein Auslesen aus demselben erfolgt jeweils abwechselnd.

Beim Aufbau einer neuen Verbindung müssen in den Haltespeicher neue Ausleseansteueradresen für den Informationsspeicher geladen werden. Um die Richtigkeit eines Eintrags prüfen zu könnnen, wird die entsprechende neu eingetragene Ansteueradresse vor der Durchschaltung der Verbindung wieder ausgelesen und durch einen Vergleich festgestellt, ob ein ordnungsgemäßer Eintrag stattgefunden hat.

Obwohl das Einschreiben jeweils eine beliebige Haltespeicherzelle betreffen kann, wurde es bisher im Zuge der üblichen Haltespeicheransteuerung vorgenommen, die, wie dargelegt, eine zyklische Ansteuerung ist. Es entstanden damit bei einem Ansteuerzyklus von 125 µs im Mittel Wartezeiten von 60 µs. Auch beim anschließenden Auslesen zum Zwecke der erwähnten Überprüfung der Richtigkeit des Haltespeichereintrags mußte wieder eine Wartezeit von 60 µs in Kauf genommen werden (siehe z.B. US-A-4 485 467).

Die Aufgabe der Erfindung besteht daher darin, ein Verfahren anzuzgeben, mit dessen Hilfe das Laden und Prüfen eines Haltespeichers in demgegenüber kürzerer Zeit durchgeführt werden kann.

Diese Aufgabe wird durch die im Kennzeichen des Patentanspruchs 1 angegebenen Maßnahmen gelöst.

Die Erfindung macht sich den Umstand zunutze, daß beim Informationsspeicher sich zyklisches Einschreiben und wahlfreies Auslesen jeweils abwechseln und damit der Haltespeicher nur während jeder zweiten Taktphase eine Ansteueradresse für den Informationsspeicher zu liefern hat. Während der jeweils anderen Taktphase erfolgt nun erfindungsgemäß durch wahlfreie Ansteuerung der Haltespeicherzellen entweder ein Einschreibvorgang im Zuge des Ladens von neuen Ansteueradressen für den Informationsspeicher oder ein Lesen im Zuge der Überprüfung einer solchen neu eingetragenen Ansteueradresse.

Weitere Ausgestaltungen der Erfindung sind in den Unteransprüchen gekennzeichnet.

Demnach werden bei einer weiteren Ausgestaltung des erfindungsgemäßen Verfahrens die Ansteueradressen für die zyklische Ausleseansteuerung des Haltespeichers und die zyklische Einschreib-Ansteuerung des Informationsspeichers einander abwechselnd durch denselben Zähler geliefert.

Bei einer vorteilhaften, zur Durchführung des erfindungsgemäßen Verfahrens dienenden Anordnung, ist ein umschaltbarer Multiplexer vorgesehen, über den, gesteuert durch das niedrigstwertige Bit der von dem Zähler gelieferten Adresseninformationen, abwechselnd die aus den übrigen Bits der Adresseninformation gebildeten Ansteueradressen als zyklische Einschreibsteueradressen und aus einem Register entnommene Ansteueradressen als wahlfrei gebildete Einschreib- oder Auslesesteueradressen dem Haltespeicher zugeführt werden.

Nachstehend wird die Erfindung anhand eines Ausführungsbeispiels unter Bezugnahme auf eine Zeichnung näher erläutert.

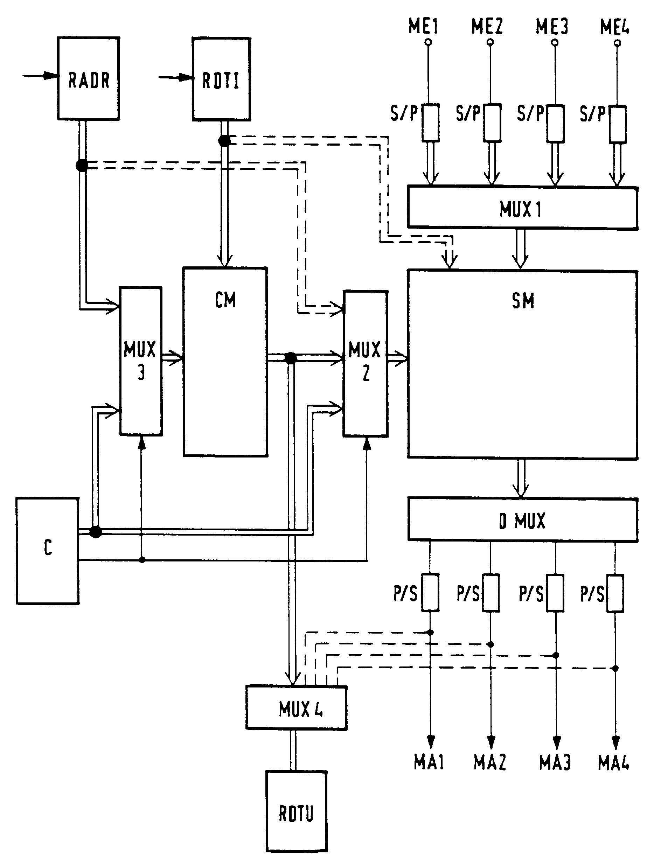

Die Figur zeigt ein Koppelstufenelement einer digitalen Zeitmultiplexvermittlungsstelle, das für den Anschluß von vier Multiplexleitungen für ankommende Übertragungsrichtungen und vier Multiplexleitungebn für abgehende Übertragungsrichtung ausgelegt ist.

Wesentlicher Bestandteil dieses Koppelelements ist ein Koppelstufeninformationsspeicher SM, an den die vier Multiplexleitungen für ankommende Übertragungsrichtung ME1 bis ME4 über Serien-Parallel-Wandler S/P und über einen Multiplexer MUX1 angeschlossen sind und von dem aus die Multiplexleitungen für abgehende Übertragungsrichtung MA1 bis MA 4 über einen Demultiplexer DMux und Parallel-Serien-Wandler P/S abgehen.

Jedem der auf der Multiplexleitung für ankommende Übertragungsrichtung gebildeten Zeitkanälen ist im Informationsspeicher SM individuell eine Speicherzelle für jeweils ein PCM-Wort zugeordnet.

Das Einschreiben in diesen Informationsspeicher von den Multiplexleitungen für ankommende Übertragungsrichtung aus erfolgt zyklisch in der Weise, daß nacheinander die Informationsinhalte der ersten Zeitkanäle auf den Multiplexleitungen eingeschrieben, dann in entsprechender Weise der Eintrag der zweiten Zeitkanäle erfolgt usw. usw.

Die Ansteueradressen für einen derartigen zyklischen Eintrag werden von einem Zähler C über einen Multiplexer Mux2 geliefert.

Die Ansteueradressen für das wahlfreie Auslesen des Informationsspeichers SM liefert ein Haltespeicher CM ebenfalls über den Multiplexer Mux2. Er wird seinerseits durch Ausleseansteueradressen beaufschlagt, die ebenfalls der Zähler C liefert und die über einen Multiplexer Mux3 an ihn gelangen.

Das zyklische Einschreiben in den Informationsspeicher SM und das wahlfreie Auslesen aus diesem Informationsspeicher erfolgt jeweils abwechselnd. D.h. die vom Zähler C gelieferten Einschreibansteueradressen und die vom Haltespeicher CM bereitgestellten Ausleseansteueradressen müssen ebenfalls abwechselnd auftreten. Dies wird dadurch erreicht, daß der Zähler C mit seinen niedrigstwertigen Bit den Multiplexer Mux2 derart beeinflußt, daß abwechselnd die vom Zähler C gelieferten Ansteueradressen (als Einschreibansteueradressen) und die vom Haltespeicher CM gelieferten Ansteueradressen (als Ausleseansteueradressen) an den Informationsspeicher SM gelangen.

Im Zuge des Aufbaus einer neuen Verbindung muß in den Haltespeicher CM eine neue Ansteueradresse für den Infortmationsspeicher SM eingeschrieben werden.

Erfindungsgemäß geschieht dies durch wahlfreie Ansteuerung des Haltespeichers CM. Hierzu wird die betreffende einzuschreibende Ausleseansteueradresse für den Informationsspeicher durch eine hier nicht dargestelelte zentrale Steuerungen in einem Register RDTI bereitgestellt. Im Zusammenhang hiermit steht in einem weiteren Register RADR eine Einschreibansteueradresse für den Haltespeicher CM bereit, die den Speicherplatz kennzeichnet, in den die erwähnte Ausleseansteueradresse für den Informationsspeicher eingeschrieben werden soll. Die im Register RADR stehende Ansteueradresse für den Haltespeicher CM kann ebenfalls über den Multiplexer Mux3 an den Haltespeicher gelangen. Der Zähler C beeinflußt mit seinem niedrigstwertigen Bit diesen Multiplexer derart, daß die Ansteuerung des Haltespeichers mit einer dem Register RADR entnommenen Ansteueradresse und einer vom Zähler C gelieferten Ansteueradresse immer nur alternativ erfolgen kann, eine Einschreibansteuerung des Haltespeichers CM also immer dann erfolgt, wenn der Informationsspeicher gerade nicht mit einer Ausleseansteueradresse zum wahlfreien Auslesen aus dem Haltespeicher CM, sondern mit einer vom Zähler C gelieferten Einschreibansteueradresse beaufschlagt wird.

Hiermit ist es beim Einschreiben von Ansteueradressen in den Haltespeicher CM nicht erforderlich, einen Ansteuerzyklus zu durchlaufen, bis die betreffende Speicherzelle, in die die neue für den Informationsspeicher als Ausleseansteueradresse bestimmte Adresse eingeschrieben werden soll, erreicht ist.

Der Haltespeicher CM wird nach dem Neueintrag einer Ansteueradresse, noch bevor die betreffende Verbindung durchgeschaltet wird, wieder ausgelesen, um durch einen Vergleich zu prüfen, ob der Eintrag ordnungsgemäß erfolgt war.

Erfindungsgemäß kann dies mit dem übernächsten Zähltakt nach dem Einschreiben geschehen, während dem der Multiplexer Mux2 für aus dem Haltespeicher CM augelesene Ansteueradressen undurchlässig ist. Die ausgelesene Ansteueradresse gelangt stattdessen über den Multiplexer Mux4 an ein Register RDTU, von wo aus sie einem Vergleich zugeführt wird.

## Patentansprüche

1. Verfahren zum Laden und Prüfen eines Haltespeichers (CM) zur Ansteuerung eines Koppelstufeninformationsspeichers (SM) in einem Koppelnetz einer digitalen Zeitmultiplex-Vermittlungsstelle, demgemäß der Haltespeicher aufgrund einer zyklischen Ausleseansteuerung seiner Speicherzellen Auslesesteueradressen zur wahlfreien Ansteuerung der Speicherzellen des Informationsspeichers liefert, die sich mit zyklisch an den Informationsspeicher gelangenden Einschreibsteueradressen abwechseln, **dadurch gekennzeichnet**, daß der Haltespeicher (CM) jeweils während der Zeitspannen, während der die Einschreibsteueradressen an den Informationsspeicher (SM) gelangen, aufgrund einer wahlfreien Einschreibansteuerung mit neuen Ansteueradressen für den Informationsspeicher beschrieben, oder aufgrund einer wahlfreien Ausleseansteuerung ausgelesen wird, um neu eingeschriebene Auslesesteueradressen für den Informationsspeicher zu Prüfzwecken einem entsprechenden Vergleich zuzuführen.

2. Verfahren nach Anspruch 1, **dadurch gekennzeichnet**, daß die Ansteueradressen für die zyklische Ausleseansteuerung des Haltespeichers (CM) und die zyklische Einschreibansteuerung des Informationsspeichers (SM) einander abwechselnd durch denselben Zähler (C) geliefert werden.

3. Anordnung zur Durchführung des Verfahrens nach Anspruch 2 mit einem Koppelstufeninformationsspeicher (SM) eines Koppelnetzes einer digitalen Zeitmultiplex-Vermittlungsstelle und einem Haltespeicher (CM) zur Ansteuerung des Koppelstufeninformationsspeichers, wobei das Einschreiben von Informationen in den Koppelpunktinformationsspeicher und das Auslesen des Haltespeichers im Zuge der Lieferung von Auslesesteueradressen für den Koppelpunktinformationsspeicher aufgrund der Ansteuerung durch einen Zähler zyklisch erfolgt, **dadurch gekennzeichnet**, daß ein einziger Zähler (C) zur Lieferung der zyklisch auftretenden Ansteueradressen vorgesehen ist, daß ferner ein erster umschaltbarer Multiplexer (MUX2) vorhanden ist, über den gesteuert durch das niedrigstwertige Bit (0) der vom Zähler gelieferten Adresseninformationen abwechselnd die aus den übrigen Bits (1 bis 10) der Adresseninformationen gebildeten Ansteueradressen für den Koppelstufeninformationsspeicher und aufgrund der zyklischen Ansteuerung durch den Zähler durch den Haltespeicher gelieferte Ausleseansteueradressen zugeführt werden, daß schließlich ein zweiter umschaltbarer Multiplexer (MUX3) vorgesehen ist, über den ebenfalls gesteuert durch das niedrigstwertige Bit (0) der vom Zähler gelieferten Adresseninformationen abwechselnd die aus den übrigen Bits der Adresseninformationen gebildeten Ansteueradressen als zyklische Auslesesteueradressen für den Haltespeicher oder wahlfrei gebildete Einschreib- oder Auslesesteueradressen für den Haltespeicher zugeführt werden, wobei im Zuge einer wahlfreien Einschreibansteuerung des Haltespeichers neue Ansteueradressen für den Koppelstufeninformationsspeicher in den Haltespeicher gelangen und im Zuge eines wahlfreien Auslesens aus dem Haltespeicher solche Ansteueradressen zum Zwecke der Überprüfung der Richtigkeit einem Vergleich mit den eingeschriebenen Adressen zugeführt werden.

## Claims

1. Method for loading and checking a control memory (CM) for selecting a switching stage information memory (SM) in a switching network of a digital time-division multiplex exchange, according to which the control memory, on the basis of a cyclic read selection of its memory cells, supplies read control addresses for the arbitrary selection of memory cells of the switching memory which alternate with write control addresses cyclically reaching the switching memory, characterized in that the control memory (CM) is in each case loaded during the time intervals during which the write control addresses reach the switching memory (SM) on the basis of an arbitrary write selection with new select addresses for the switching memory, or is read on the basis of an arbitrary read selection in order to supply newly loaded read control addresses for the switching memory to a corresponding comparison for checking purposes.

2. Method according to Claim 1, characterized in that the select addresses for the cyclic read selection of the control memory (CM) and the cyclic write selection of the switching memory (SM) are delivered alternatingly by the same counter (C).

3. Arrangement for carrying out the method according to Claim 2, comprising a switching stage information memory (SM) of a switching network of a digital time-division multiplex exchange and a control memory (CM) for selecting the switching stage information memory, the loading of information into the switching point information memory and the reading of the control memory in the course of the provision of read control addresses for the switching point information memory taking place cyclically on the basis of the selection by a counter, characterized in that a single counter (C) for supplying the cyclically occurring select addresses is provided, in that furthermore a first switchable multiplexer (MUX2) is present, via which, controlled by the least significant bit (0) of the address information supplied by the counter, the select addresses formed from the remaining bits (1 to 10) of the address information for the switching stage information memory and read select addresses supplied by the control memory on the basis of the cyclic selection by the counter are supplied alternately, and in that, finally, a second switchable multiplexer (MUX3) is provided, via which, also controlled by the least significant bit (0) of the address information supplied by the counter, the select addresses formed from the remaining bits of the address information are supplied as cyclic read control addresses for the control memory or arbitrarily formed write or read addresses for the control memory are supplied alternately, wherein, in the course of an arbitrary write selection of the control memory, new select addresses for the switching stage information memory reach the control memory and such select addresses, in the course of an arbitrary reading from the control memory, are supplied to a comparison with the loaded addresses for the purpose of checking the correctness.

## Revendications

1. Procédé pour charger et tester une mémoire de commande (CM) pour l'excitation d'une mémoire (SM) de stockage des informations des étages de commutation dans un réseau de connexion d'un central numérique à division du temps, selon lequel la mémoire de commande, en raison d'une sélection cyclique en lecture de ses cellules de mémoire, délivre des adresses de sélection en lecture pour l'excitation aléatoire des cellules de mémoire de la mémoire de stockage des informations, ces adresses alternant avec les adresses de sélection en écriture parvenant d'une façon cyclique à la mémoire de stockage des informations,
**caractérisé par le fait** que la mémoire de commande (CM), pendant chaque période de temps pendant laquelle les adresses de sélection en écriture parviennent à la mémoire (SM) de stockage des informations, en raison d'une sélection aléatoire en écriture, est chargée avec de nouvelles adresses de sélection pour la mémoire de stockage des informations ou, en raison d'une sélection aléatoire en lecture, est lue pour soumettre, à des buts de vérification, des adresses de sélection en lecture pour la mémoire de stockage des informations nouvellement inscrites à une comparaison correspondante.

2. Procédé selon la revendication 1
**caractérisé par le fait** que les adresses de sélection pour l'excitation cyclique en lecture de la mémoire de commande (CM) et l'excitation cyclique en écriture de la mémoire (SM) de stockage des informations sont fournies tour à tour par le même compteur (C).

3. Dispositif pour l'exécution du procédé selon la revendication 2 avec une mémoire (SM) de stockage des informations des étages de commutation dans un réseau de connexion d'un central numérique à division du temps et avec une mémoire de commande (CM) pour l'excitation de la mémoire de stockage des informations des étages de commutation, l'écriture d'informations dans la mémoire de stockage des informations des points de connexion et la lecture de la mémoire de commande ayant lieu d'une façon cyclique, en raison de l'excitation par un compteur, dans le cadre de la fourniture d'adresses de sélection en lecture pour la mémoire de stockage des informations des points de connexion,
**caractérisé par le fait**
qu'un seul compteur (C) est prévu pour fournir les adresses de sélection apparaissant cycliquement,
que, en outre, il existe un premier multiplexeur commutable (MUX2) par l'intermédiaire duquel, sous le contrôle du bit (0) de poids le plus faible des informations d'adresses fournies par le compteur, sont transmises de façon alternée d'une part les adresses de sélection pour la mémoire de stockage des informations des étages de commutation, formées par les autres bits (1 à 10) des informations d'adresses, et, d'autre part, des adresses de sélection en lecture délivrées par la mémoire de commande, en raison de son excitation cyclique, par le compteur,
que, finalement, un deuxième multiplexeur commutable (MUX3), par l'intermédiaire duquel, également sous le contrôle du bit (0) de poids le plus faible des informations d'adresses foumies par le compteur, les adresses de sélection formées par les autres bits des informations d'adresses sont transmises alternativement en tant qu'adresses cycliques de sélection en lecture pour la mémoire de commande ou en tant qu'adresses de sélection en écriture ou en lecture formées d'une façon aléatoire, de nouvelles adresses de sélection pour la mémoire de stockage des informations des étages de commutation parvenant à la mémoire de commande, dans le cadre d'une sélection aléatoire en écriture de la mémoire de commande, et de telles adresses de sélection étant soumises, dans le but d'une vérification d'exactitude, à une comparaison avec les adresses inscrites, dans le cadre d'une lecture aléatoire sur la mémoire de commande.
